# EUROPÄISCHE PATENTSCHRIFT

(11) **EP 0 302 261 B1**
(45) Veröffentlichungstag und Bekanntmachung des Hinweises auf die Patenterteilung: **30.03.1994**
(21) Anmeldenummer: 88111112.4
(22) Anmeldetag: 12.07.1988
(51) Int. Cl.: B60J 5/06, B60J 7/10

(54) **Fahrzeug mit einer auf Spriegeln montierten Abdeckplane**
Vehicle with a tarpaulin mounted on hoops
Véhicule avec une bâche montée sur cerceaux

(30) Priorität: 05.08.1987 DE 3725970
(43) Veröffentlichungstag der Anmeldung: 08.02.1989
(73) Patentinhaber: Peter Maier Leichtbau GmbH, 78224 Singen (DE)
(72) Erfinder: Maier, Peter, D-7703 Rielasingen-Worblingen (DE); Brodbeck, Klaus Peter, D-7700 Singen (DE)
(74) Vertreter: Allgeier, Kurt

(56) Entgegenhaltungen:
- EP-A- 0 018 073
- EP-A- 0 139 935
- DE-U- 8 210 524
- GB-A- 2 066 746
- US-A- 2 967 734

## Beschreibung

Die Erfindung bezieht sich auf ein Fahrzeug mit einer auf Spriegeln montierten Abdeckplane nach dem Oberbegriff des Patentanspruchs 1. Ein Fahrzeug dieser Art ist durch die EP-A1-0 018 073 bekanntgeworden.

Bei derartigen Fahrzeugen, Lastkraftwagen oder Anhängern in konventioneller Ausbildungsweise sind die Abdeckplanen an ihren unteren Rändern in Abständen mit durch Metallringe eingefassten Löchern versehen, die über entsprechend angeordnete, an den Seitenbordwänden angebrachte Ösen gestülpt sind.

Ausgehend von diesem Stand der Technik werden erfindungsgemäss die Massnahmen nach dem Kennzeichen des Patentanspruchs 1 vorgeschlagen. Dadurch wird die Aufgabe gelöst, bei einem derartigen Fahrzeug unter Beibehaltung der durch den Stand der Technik bekannten vorteilhaften Wirkungen der Planenabdeckung durch vorteilhafte Umgestaltung und weitere Ausbildung eine höhere Betriebssicherheit und einfachere Bedienbarkeit zu erreichen.

Es werden die Durchführungen der Aufrollgurte durch Schlitze in besonderen Taschen vermieden, wodurch Störungen oder Beschädigungen hervorgerufen werden können, und es können auch auf die an längsverteilten Stellen auf der Aufrollwelle befestigten, platzaufwendigen Gurtaufrolltrommeln erspart werden.

Weitere vorteilhafte Ausbildungsmerkmale bestehen noch darin, dass die beidseits am hinteren Fahrzeugende von den Unterkanten der Abdeckplane innerhalb der Spriegelgestelle nach oben geführten Zugmittel über Umlenkmittel in die Hohlräume der Spriegel-Längsleisten nach vorne geführt und dort über weitere Umlenkmittel um 180° gewendet und wieder nach hinten geführt und mit den in den vorderen Planspriegeln nach oben geführten und in die Spriegel-Längsleisten umgelenkten vorderen Zugmitteln von den Unterkanten der Abdeckplane zu jeweils einem Zugmittel zusammengeschlossen sind. Ferner geht der weitere Vorschlag dahin, dass die Umlenkmittel in den Hohlräumen von Eckverbindungen zwischen den vertikalen Planspriegeln und den diese verbindenden Spriegel-Längsleisten angeordnet sind.

Die Zugmittel werden vollständig in Hohlräumen des Spriegelgestells geführt und sind durch diese Ummantelung vor Verschmutzung und Beschädigung geschützt.

Durch die US-A-2 967 734 ist eine Lösung der der Erfindung zugrundeliegenden Aufgabe bekannt geworden, bei welcher die Probleme der hier geschilderten Vorteile ausser Acht gelassen worden sind. Die Zugmittel verlaufen an den Aussenseiten der Abdeckplane ungeschützt und können an Hindernissen z. B. Ästen von Bäumen oder Gestrüpp hängenbleiben. Das gleiche gilt auch für die oberhalb der Dachhaut der Abdeckplane verlaufenden, auf Rollen geführten Zugmittel.

Durch die erfindungsgemässe Ausbildungsweise werden auch diese Nachteile vermieden, und es wird ermöglicht, dass nach dem Lösen der Unterkanten der Abdeckplane von den Seitenbordwänden jede Seite oder auch beide Seiten der Abdeckplane zugleich durch nur eine Zugbetätigung an den Zugmitteln nach oben gezogen werden kann. Dabei faltet sich die Abdeckplane in an sich bekannter Weise harmonika-artig zusammen. Durch eine Verriegelung der Zugmittel wird verhindert, dass die Abdeckplane ungewollt nach unten fällt. Als Zugmittel können stahl- oder Kunststoffseile oder auch Rollenketten und als Umlenkmittel Umlenkrollen oder aber Kettenräder oder Umlenkkufen aus einem Gleitwerkstoff dienen.

Ausserdem ergeben sich noch vorteilhafte Ausbildungsmerkmale der Erfindung aus den weiteren Patentansprüchen. So können die Zugmittel zum Hochziehen der Abdeckplane von Hand zu betätigen und in Ruhestellung an den hinteren Spriegelgestellen eingehängt sein, oder sie sind mittels hand- oder motorbetriebener Winden betätigbar. Die Winden können mittels Druckluft, Hydraulik oder elektrisch angetrieben sein. Die Zugmittel können aber auch im Bedarfsfall seitlich an der hinteren Ladebordwand in einem Abstand von der Schwenkachse festlegbar sein, so dass beim Ausfahren der Ladebordwand zugleich ein- oder beidseitig die Abdeckplane jalousienartig hochgezogen wird.

Ein dieser Ausbildungsmerkmale der Erfindung ist darin zu sehen, dass die beidseitigen Unterkanten der Abdeckplane mit einer metallenen Unterkanten-Profilleiste verbunden und diese beidends mit Führungsnasen versehen sind, die in Führungsnuten des Hohlprofils des vertikalen Teils der Spriegelgestelle gleitend geführt und mit den in deren Hohlräumen angeordneten Zugmitteln verbunden sind. Durch diese Maßnahme wird eine einwandfreie vertikale Führung der Unterkante der Abdeckplane erreicht.

Zusätzlich wird vorgeschlagen, daß auf beiden Innenseiten der Abdeckplane zwischen den Unterkanten-Profilleisten und den oberen Spriegel-Längsleisten an zwei oder mehreren Stellen Gummigurte oder dgl. eine Rückstellkraft ausübende elastische Elemente unter Vorspannung befestigt sind. Infolge der Zugkraft der Gummigurte wird ein gewisser Gewichtsausgleich geschaffen, so dass beispielsweise beim Hochziehen von Hand die erforderliche Zugkraft verringert wird. Ausserdem unterstützt der Gummizug die Bildung der Harmonikafalten. Weiterhin können an den Gummigurten diese verbindende formsteife Längsleisten aus Metall oder Kunststoff befestigt sein, welche die Abdeckplane in Längsrichtung versteifen und die Bildung von gleichmässigen Harmonikafalten beim Hochziehen unterstützen.

Zur besseren Führung und auch zur Verstärkung ist die Abdeckplane jeweils an ihren vertikalen Endkanten mit einem nach der Innenseite hin verdickten Keder versehen, der in eine vertikal verlaufende Nutvertiefung der ebenen Aussenfläche der Planspriegel passt.

Zur Verbesserung der Befestigung der Abdeckplane an dem Spriegel- und Bordwandaufbau wird weiterhin vorgeschlagen, dass die beidendigen, von den Kedern begrenzten Aussenstreifen der Abdeckplane auf den Aussenflächen der Spriegelgestelle aufliegen und mittels unter einem Anpressdruck stehenden Halteleisten an diesen klemmend gehalten sind. Dabei ist erfindungsgemäss von besonderem Vorteil, dass in den beidendigen Aussenstreifen der Abdeckplane in Abständen vorhandene, von Ösen eingefasste Löcher mit entsprechend angeordneten und dimensionierten Durchbrechungen in den Aussenflächen der Planspriegel übereinstimmen und von Bolzen durchsetzbar sind, welche an den Innenseiten der Halteleisten befestigt sind und im geschlossenen Zustand in die Hohlräume der Spriegelgestelle hineinragen.

Bei dieser Ausbildungsweise können die Halteleisten schwenkbar im Kantenbereich der Spriegelgestelle angelenkt oder sie können mittels eines walzen- oder scharnierartigen Gelenks in einer nutartigen Ausnehmung im Spriegelgestell gelagert sein.

Besonders vorteilhafterweise sind die Halteleisten mittels eines gefederten Kipphebelgelenks in eine Schliess- und Öffnungsstellung bewegbar und sind dann unter Vorspannung in einer der Stellungen gehalten.

Durch diese neuartige Ausgestaltung der Befestigung der Abdeckplane entfällt beim seitlichen Öffnen oder Abnehmen der Plane das Herausziehen des Sicherungsseils aus den Ösen längs der Seitenbordwand. Vielmehr können durch das Entfernen bzw. Aufklappen der Halteleisten an beiden Enden die Aussenstreifen der Abdeckplane sofort freigelegt und die Unterkanten können - geführt in den Spriegelgestellen - jalousienartig nach oben gezogen werden, wobei sie sich zusammenfalten.

Die Befestigungs- und Führungsausbildung der Abdeckplane nach der Erfindung entsprechend den beschriebenen Merkmalen kann auch noch weiterhin dadurch verbessert werden, dass an der Innenseite der Halteleisten im Bereich unterhalb der Führungsnasen nach innen gerichtete, in der Geschlossenstellung die Führungsnasen der Unterkanten-Profilleisten in Schliesstellung der Halteleisten übergreifende und diese verriegelnde Sperrnocken angebracht sind. Dabei ist es von zusätzlichem Vorteil, wenn die Unterkanten der Sperrnocken mit einer geringen Steigung keilförmig geformt sind. Beim Zuklappen der Halteleisten übergreifen die Sperrnocken die in den Hohlraum der Spriegelgestelle hineinragenden Führungsnasen der jeweiligen Unterkanten-Profilleiste und verriegeln diese gegen ungewolltes oder unbefugtes Nachobenbewegen noch zusätzlich, und zwar wird dabei durch die keilförmige Steigung der Sperrnocken eine nach unten gerichtete Vorspannung erzeugt.

Eine weitere vorteilhafte Massnahme besteht noch darin, dass die Halteleisten jeder Seite in ihrer Schliesstellung verriegelbar sind. Durch die Halteleisten wird nicht nur eine einwandfreie Anlage der Endkanten der Abdeckplane an den Spriegelgestellen unter leichter Spannung nach unten erreicht, es ergibt sich somit auch eine sehr einfache Möglichkeit der Sicherung gegen unbefugtes Öffnen durch diese Verriegelungsmöglichkeit. Die Sicherung gegen unbefugtes Öffnen kann durch Vorhängeschlösser ermöglicht werden, vorzugsweise jedoch durch in die Sperrnocken eingebaute Sicherheits-Zylinderschlösser, deren Riegel sich ein- oder beidseitig hinter die Innenwandfläche der Hohlräume der Spriegelgestelle setzen.

Bezüglich einer verbesserten Festlegung der Abdeckplane an den Seitenbordwänden besteht ferner die Möglichkeit, dass die Unterkanten-Profilleisten an einer oder mehreren längsverteilten Stellen mit Verriegelungsvorrichtungen versehen sind, deren Riegelkrallen in die Profilleiste zurückziehbar sind und mit örtlich passend angeordneten Öffnungen, Schlitzen oder dgl. im Schliesszustand in Eingriff stehen.

Die zusätzliche Weiterbildung der Erfindung umfasst auch noch einen Vorschlag für den Aufbau des Planspriegel-Gestells auf dem Fahrzeug. Hierzu besteht der Vorschlag darin, dass am oberen Ende jedes Spriegelgestells ein Eckverbindungsstück einsteckbar ist, welches einen in Fahrzeuglängsrichtung weisenden Steckansatz zum Einstecken der Spriegel-Längsleisten und einen weiteren in Fahrzeugrichtung weisenden Steckansatz zum Einstecken von Spriegel-Dachleisten und Mittel zum Fixieren der Einsteckteile sowie Lagerstellen für die Umlenkmittel aufweist.

Durch diese Ausbildungsmassnahme ist es möglich, als vertikalen Teil der Spriegelgestelle stranggezogene oder stranggepresste Profile zu verwenden, die lediglich auf Länge geschnitten und mit den vorgesehenen Bohrungen, Durchbrechungen oder dgl. versehen werden müssen. Die übrigen Funktionsteile wie Umlenkmittel für die Zugelemente oder Mittel zum Fixieren der Einsteckteile gegeneinander sind an bzw. in den Eckverbindungsstücken angebracht.

Weiterhin können die Spriegel-Dachleisten sowohl einstückig als auch zweiteilig ausgeführt und je nach der Breite des Aufbaues dimensioniert sein. Bei zweiteiliger Ausführung kann ein dachförmiger Aufbau mit wählbarem Firstwinkel ausgebildet werden, wenn die Teile im Mittenbereich gelenkig verbunden sind. Auch diese Gelenkverbindung kann steckbar sein, so dass auch die Teile der Spriegel-Dachleisten aus gezogenem oder gepresstem Strangmaterial hergestellt sein können.

Weitere Merkmale, Besonderheiten und Vorteile sind anhand der in der Zeichnung dargestellten Ausführungsbeispiele näher beschrieben und erläutert.

Es zeigen
- Fig. 1: die schematische Seiten-Darstellung eines Lkw mit einer auf Spriegeln montierten Abdeckplane und einer hinteren Ladebordwand;
- Fig. 2: eine Einzelheit bei X gem. Fig. 1;
- Fig. 3: eine schematische Darstellung der prinzipiellen Anordnung der Zugmittel;
- Fig. 4: eine Darstellung von Einzelheiten bei Y gem. Fig. 1;
- Fig. 5: einen Teilschnitt C - C gem. Fig. 4;
- Fig. 6: einen Schnitt B - B gem. Fig. 3.

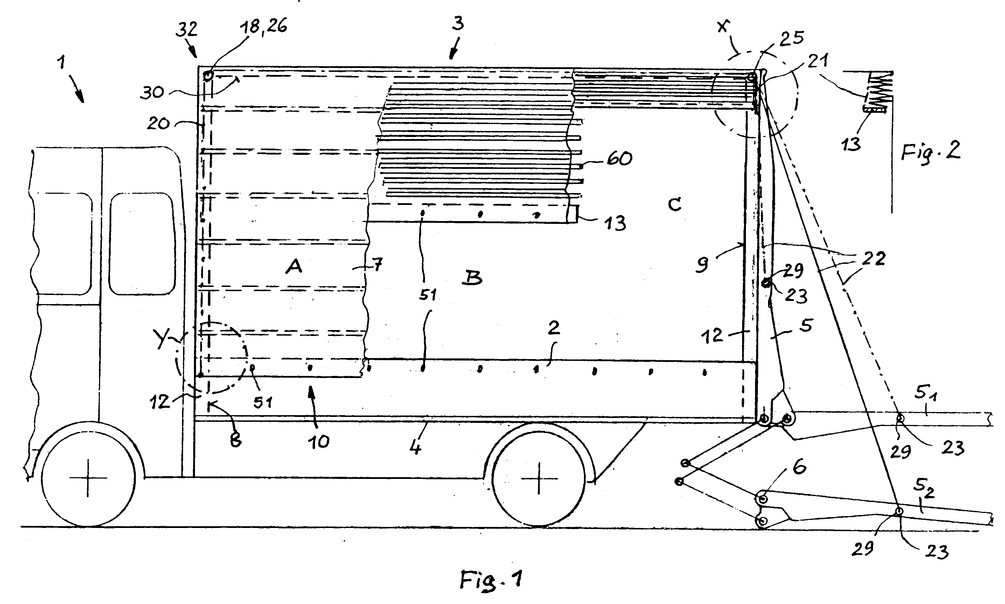

In Fig. 1 ist der Lkw 1 mit Seitenbordwänden 2, einer auf Spriegeln montierten Abdeckplane 7 und einer hinteren Ladebordwand 5 versehen. Der Spriegelaufbau besteht aus den Spriegel-Gestellen 8 und 9, den Spriegel-Längsleisten 30 und den nicht im einzelnen dargestellten Spriegel-Dachleisten, die das Abdeckplanendach 3 unterstützen.

Die Darstellung zeigt die Abdeckplane in den Stellungen A, B und C. In der Stellung A ist die Abdeckplane vollständig geschlossen, während sie in der Stellung B etwa zur Hälfte hochgezogen ist. Die Stellung C zeigt die Abdeckplane in völlig geöffnetem Zustand.

Die Spriegelgestelle 8, 9 sind am Fahrzeugrahmen 4 befestigt und in Längsrichtung mittels der Eckverbindungen 32 miteinander durch die Spriegel-Längsleisten 30 sowie in Querrichtung durch nicht dargestellte Spriegel-Dachleisten verbunden. An den Unterkanten 10 der Abdeckplane 7 sind innenseitig die Unterkanten-Profilleisten 13 befestigt, welche an den Außenseiten der Seitenbordwände 2 anliegen. Mit 51 sind Verriegelungsvorrichtungen angedeutet, mittels welcher die Unterkanten-Profilleisten 13 an den Seitenbordwänden festgelegt werden können.

An den Unterkanten-Profilleisten 13 sind vorne und hinten die Zugmittel 20, 21 befestigt und in den Hohlräumen 11 der Spriegelgestelle 8, 9 nach oben geführt, wo sie über die Umlenkmittel 18, 25, 26 geleitet und in den Hohlräumen 31 der Spriegel-Längsleisten 30 geführt sind.

Die Zugmittel 20, 21 sind zu den Zugmitteln 22 vereinigt und aus den Hohlräumen nach außen geführt, wo die Enden 23 seitlich bei 29 an der Ladebordwand 5 in einem Abstand von der Schwenkachse 6 eingehängt sind.

In Fig. 1 ist die Ladebordwand in ihrer Geschlossenstellung 5 und in zwei verschiedenen Öffnungsstellungen 5₁ und 5₂ mit eingehängten Zugmittelenden 23 gezeigt. In der Stellung 5 der Ladebordwand ist die Abdeckplane geschlossen, siehe Stellung A, während die Stellungen der Ladebordwand 5₁ der Stellung B der Abdeckplane und 5₂ der Stellung C der Abdeckplane entsprechen.

In der geschlossenen Stellung A der Abdeckplane 7 ist diene mit ihrer Unterkanten-Profilleiste 13 mittels der Verriegelungsvorrichtungen 51 mit der Seitenbordwand 2 verbunden.

Wie aus der Darstellung B ersichtlich ist, befinden sich an den Innenseiten der Abdeckplane 7 formsteife Längsleisten 60, die an den Gummigurten befestigt sind (s. Fig. 1 und 2). In der Stellung B ist die Abdeckplane 7 etwa halb hoch gezogen, wobei sich harmonikaartige Seitenfalten bilden. Dagegen befindet sich die Abdeckplane 7 in der Stellung C in ihrer voll geöffneten Lage und bildet eng aneinanderliegende Seitenfalten. Diese werden vor allem durch die Längsleisten 60 gut ausgebildet.

Die Fig. 2 zeigt schematisch eine Einzelheit bei X nach Fig. 1. Dort ist die harmonika-artige Seitenfaltenbildung angedeutet, und es ist ferner erkennbar, wie die Unterkanten-Profilleiste 13 infolge des Zuges des Zugmittels 20, welches an deren Unterkante befestigt ist, derart nach oben gezogen wird, daß sie waagerecht gehalten ist und somit eine größere Öffnungshöhe freigibt als bei senkrechter Lage.

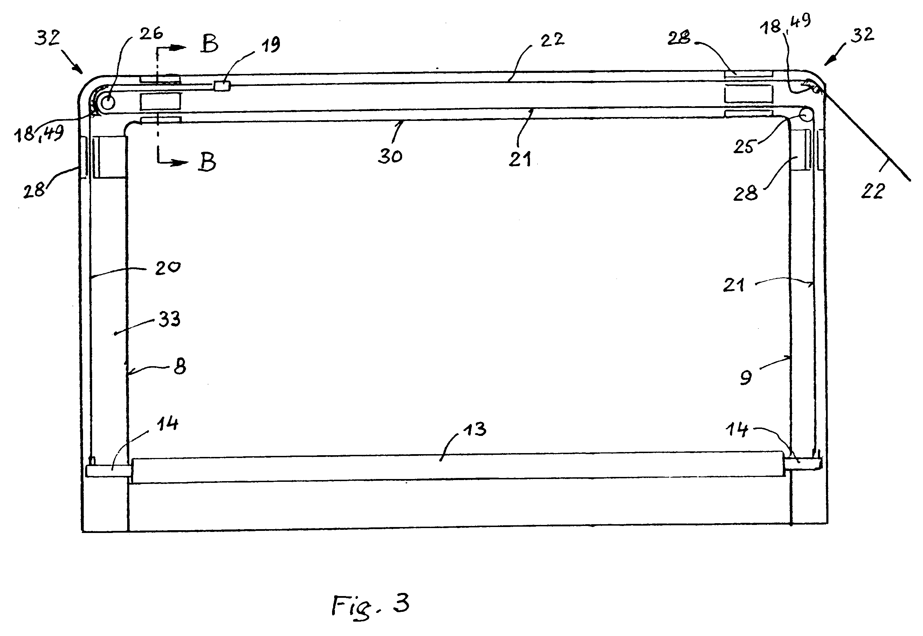

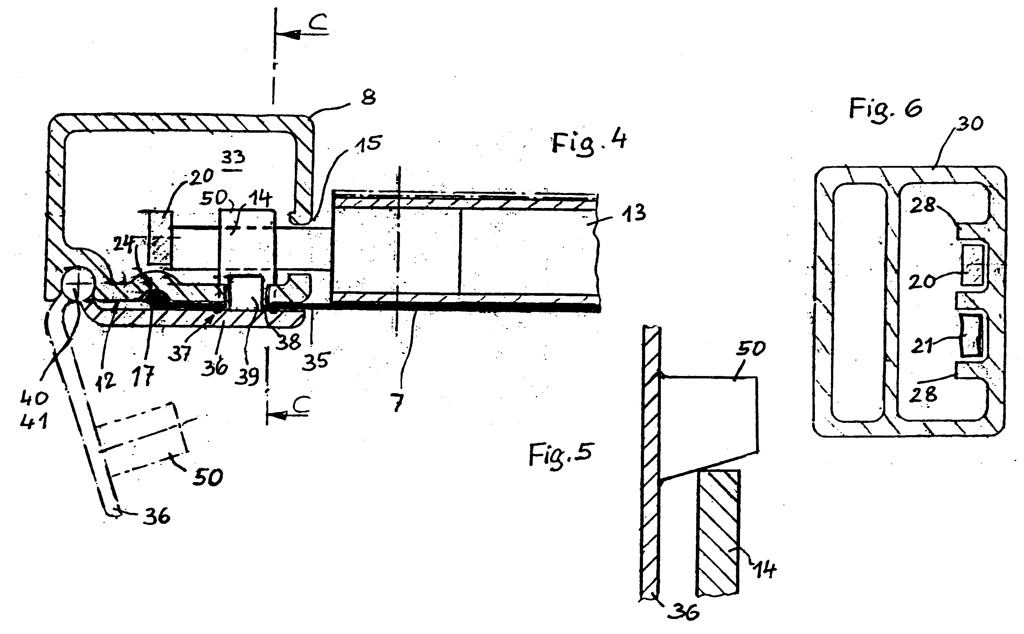

Die prinzipielle Anordnung der Zugmittel ist in Fig. 3 beispielhaft schematisch dargestellt. In den Hohlräumen 33 der Spriegelgestelle 8, 9 verlaufen die Zugmittel 20, 21. Diese sind an den Führungsnasen 14 der Unterkanten-Profilleiste 13 befestigt. Diese Führungsnasen 14 laufen in Führungsnuten 15 (Fig. 4) der Spriegelgestelle 8, 9. Die Zugmittel sind in den Hohlräumen 33 mittels Führungsleisten 28 geführt.

Es sind verschiedene Umlenkmittel 18 innerhalb der Hohlräume 33 der Eckverbindungen 32 angeordnet, und zwar Umlenkkufen 49 für das Zugmittel 20 und Umlenkrollen bzw. Kettenräder 26 je nach Art des verwendeten mit 20 angedeuteten Zugmittels, welches ein Seil oder eine Kette sein kann. Das Zugmittel 21, welches am hinteren Ende der Unterkanten-Profilleiste 13 bzw. an deren Führungsnase 14 befestigt ist, läuft über die Umlenkrolle bzw. das Kettenrad 25 in die Spriegel-Längsleiste 30 ein und wird dort mittels des oben erwähnten Umlenkmittels 26 umgelenkt und ist mittels des Seil- oder Kettenschlosses 19 mit den Zugmitteln 20 und 22 verbunden. Das gemeinsame Zugmittel 22 ist über die Umlenkkufe 49 im Bereich der Spriegelgestelle 9 nach hinten hinausgeführt.

Die Fig. 4 zeigt die Einzelheiten bei Y in Fig. 1. Die Unterkanten-Profilleiste 13 ist mit dem Material der Abdeckplane 7 verbunden, diese ragt jedoch um den Außenstreifen 35 über die seitliche Endkante der Unterkanten-Profilleiste 13 hinaus, so daß sie auf der Außenfläche 12 des Spriegelgestells 8 anliegt. Die vertikale Endkante des Außenstreifens 35 ist mit einem Keder 17 versehen. Dieser schmiegt sich in die Nutvertiefung 24 der Außenfläche 12 des Spriegelgestells 8 ein.

An der Unterkanten-Profilleiste 13 ist seitlich die Führungsnase 14 angebracht, die in der Führungsnut 15 des Spriegelgestells 8 läuft und in dessen Hohlraum 33 hineinragt. An der Führungsnase 14 ist als Zugmittel 20 eine Kette befestigt.

Der auf der Außenfläche 12 des Spriegelgestells 8 anliegende Außenstreifen 35 der Abdeckplane 7 wird - wie aus Fig. 4 erkennbar - durch die Halteleiste 36 auf die Außenfläche 12 angedrückt. Dabei steht die Halteleiste 36 in nicht dargestellter Weise unter der Wirkung einer Federkraft.

Ferner weist der Außenstreifen 35 der Abdeckplane 7 in vertikaler Richtung in abstandsverteilt mit Randösen eingefaßte Löcher 37 auf, die mit Durchbrechungen 38 in den Außenflächen 12 des Spriegelgestells 8 übereinstimmen. An der Innenseite der Halteleiste 36 sind ebenfalls abstandsverteilt und mit den Löchern 37 und Durchbrechungen 38 übereinstimmend Bolzen 39 angebracht, welche bei geschlossener Halteleiste 36 durch die Löcher 37 und die Durchbrechungen 38 hindurchgreifen und in den Hohlraum 33 des Spriegelgestells 8 hineinragen. Dadurch ist ein absolut fester Sitz der Abdeckplane 7 am Spriegelgestell 8 gewährleistet. Das Lösen der Abdeckplane 7 geschieht in einfacher Weise durch Öffnen der Halteleiste 36. Diese ist zu diesem Zweck mittels des Lagers 40, 41 schwenkbar im Kantenbereich des Spriegelgestells 8 angelenkt.

In Fig. 5 ist ein Teilschnitt längs der Linie C - C durch das Spriegelgestell 8 dargestellt. Es ist zu erkennen, daß auf der Innenseite der Halteleiste 36 ein Sperrnocken 50 angebracht ist, dessen Unterseite eine Steigung aufweist, welche sich über die Oberkante der Führungsnase 14 schiebt und diese nach unten drückt. Durch diese Maßnahme wird in bestimmten Grenzen eine gewisse Vorspannung in den Seitenwänden der Abdeckplane 7 erzielt, so daß diese zwischen der Unterkanten-Profilleiste 13 und der Spriegel-Längsleiste 30 nicht flattert.

Die Darstellung der Fig. 6 zeigt einen Schnitt B - B durch die Spriegel-Längsleiste 30 nach Fig. 3. Es ist erkennbar, daß durch die Führungsleisten 28 die im Beispiel als Ketten gewählten Zugmittel 20, 21 sich nicht gegenseitig verheddern oder sonst stören.

### Bezugszeichenliste

### Pos. Benennung/Designation

- **1**: Lkw
- **2**: Seitenbordwand
- **3**: Abdeckplanendach
- **4**: Fahrzeugrahmen
- **5**: Ladebordwand
- **6**: Schwenkachse
- **7**: Abdeckplane
- **8**: Planspriegel
- **9**: Planspriegel
- **10**: Unterkanten Abdeckplane
- **12**: Außenflächen von 8 und 9
- **13**: Unterkanten-Profilleiste
- **14**: Führungsnasen
- **15**: Führungsnuten
- **17**: Keder
- **18**: Umlenkmittel
- **19**: Seil- oder Kettenschlösser
- **20**: Zugmittel
- **21**: Zugmittel
- **22**: Zugmittel
- **23**: Enden (der Zugmittel)
- **24**: Nutvertiefung
- **25**: Umlenkmittel
- **26**: Umlenkmittel
- **28**: Führungsleisten
- **29**: Haken, Ösen
- **30**: Spriegel-Längsleisten
- **32**: Eckverbindungen
- **33**: Hohlprofile
- **35**: beidendige Außenstreifen
- **36**: Halteleisten
- **37**: Löcher mit Ösen eingefaßt
- **38**: Durchbrechungen
- **39**: Bolzen
- **40**: Walzenlager
- **41**: Ausnehmung, nutartig
- **49**: Umlenkkufen
- **50**: Sperrnocken
- **51**: Verriegelungsvorrichtungen
- **60**: formsteife Längsleisten

## Patentansprüche

1. Fahrzeug mit einer auf Spriegeln montierten Abdeckplane, bei dem eine oder beide Längsseiten der Abdeckplane (7) nach oben ziehbar und dabei Längsfalten bildend harmonikaartig zusammenfaltbar und bei dem an jeder Fahrzeugseite an den Unterkanten (10) der Abdeckplane (7) wenigstens zwei nach oben führende, mittels einer kraftbetriebenen Zugvorrichtung betätigbare Zugmittel (20, 21) angeschlossen sind,
dadurch gekennzeichnet,
daß die beiderseitigen, an den Enden der Abdeckplane (7) angeschlossenen Zugmittel (20, 21) über Umlenkmittel (18) geleitet und an jeder Fahrzeugseite zu einem gemeinsamen Zugmittel (21) zusammengeschlossen und dabei innerhalb von Hohlräumen (11) des vertikalen Teils der beidseits und beidends des Planenaufbaues angeordneten Spriegelgestells (8, 9) zunächst nach oben und innerhalb von Hohlräumen (31) von beidseits je zwei Spriegelgestellen (8, 9) in Längsrichtung verbindenden Spriegel-Längsleisten (30) geführt sind.

2. Fahrzeug nach Anspruch 1, dadurch gekennzeichnet, daß die beidseits am hinteren Fahrzeugende von den Unterkanten (10) der Abdeckplane (7) innerhalb der Spriegelgestelle (8) nach oben geführten Zugmittel (20) über Umlenkmittel (25) in die Hohlräume (31) der Spriegel-Längsleisten (30) nach vorne geführt und dort über weitere Umlenkmittel (26) um 180° gewendet und wieder nach hinten geführt und mit den in den vorderen Planspriegeln (9) nach oben geführten und in die Spriegel-Längsleisten (30) umgelenkten vorderen Zugmitteln (21) von den Unterkanten (10) der Abdeckplane (7) zu jeweils einem Zugmittel (22) zusammengeschlossen sind.

3. Fahrzeug nach Anspruch 1, dadurch gekennzeichnet, daß die Umlenkmittel (18) in den Hohlräumen von Eckverbindungen zwischen den vertikalen Planspriegeln (8, 9) und den diese verbindenden Spriegel-Längsleisten (30) angeordnet sind.

4. Fahrzeug nach einem oder mehreren der Ansprüche 1 bis 3, dadurch gekennzeichnet, daß als Zugmittel (20, 21) Stahl- oder Kunststoffseile oder Rollenketten dienen.

5. Fahrzeug nach einem oder mehreren der Ansprüche 1 bis 3, dadurch gekennzeichnet, daß als Umlenkmittel (18) Umlenkrollen, Kettenräder oder Umlenkkufen (49) aus einem Gleitwerkstoff dienen.

6. Fahrzeug nach Anspruch 1, dadurch gekennzeichnet, daß die beiden Zugmittel (20, 21) auf jeder Fahrzeugseite mittels Seil- oder Kettenschlössern (19) zusammengeschlossen und an je einem anschließenden Zugmittel (22) angekoppelt sind.

7. Fahrzeug nach den Ansprüchen 1, 2 und 6, dadurch gekennzeichnet, daß die Enden (23) der anschließenden Zugmittel (22) aus Öffnungen in den Hohlräumen (31) der Spriegel-Längsleisten (30) oder der hinteren Spriegelgestelle (8) nach außen geführt und unter kleiner Vorspannung an Haken, Ösen (29) oder dgl. griffbereit einhängbar sind.

8. Fahrzeug nach den Ansprüchen 1, 2 und 5, dadurch gekennzeichnet, daß die Enden (23) der anschließenden Zugmittel (22) beidseitig an hand- oder motorbetriebenen Winden (27) angeschlossen sind, die einzeln oder gekuppelt antreibbar sind.

9. Fahrzeug nach den Ansprüchen 1, 2 und 5, dadurch gekennzeichnet, daß die Enden (23) der anschließenden Zugmittel (22) ein- oder beidseitig an einer Ladebordwand (5) in einem Abstand von deren Schwenkachse (6) seitlich festlegbar sind.

10. Fahrzeug nach Anspruch 1 und wenigstens einem der folgenden Ansprüche, dadurch gekennzeichnet, daß die Spriegelgestelle (8, 9) in ihrem vertikalen Teil und die mit diesen verbundenen Spriegel-Längsleisten (30) sowie die diese Teile verbindenden Eckverbindungen (32) als Hohlprofile (33) zur Aufnahme der Zugmittel (20, 21, 22) ausgebildet und mit wenigstens einer ebenen nach außen weisenden Fläche (12) versehen sind.

11. Fahrzeug nach Anspruch 10, dadurch gekennzeichnet, daß die Hohlprofile (33) als Rechteckprofile gestaltet und mit Führungsleisten (28) für die Zugmittel (20, 21) versehen sind.

12. Fahrzeug nach Anspruch 1, dadurch gekennzeichnet, daß die beidseitigen Unterkanten (10) der Abdeckplane (7) mit einer metallenen Unterkanten-Profilleiste (13) verbunden und diese beidends mit Führungsnasen (14) versehen sind, die in Führungsnuten (15) des Hohlprofils (33) des vertikalen Teils der Spriegelgestelle (8, 9) gleitend geführt und mit den in deren Hohlräumen angeordneten Zugmitteln (20, 21) verbunden sind.

13. Fahrzeug nach Anspruch 12, dadurch gekennzeichnet, daß auf beiden Innenseiten der Abdeckplane (7) zwischen den Unterkanten-Profilleisten (13) und den oberen Spriegel-Längsleisten (30) an zwei oder mehreren Stellen Gummigurte oder dgl. eine Rückstellkraft ausübende elastische Elemente unter Vorspannung befestigt sind.

14. Fahrzeug nach Anspruch 13, dadurch gekennzeichnet, daß an den Gummigurten diese verbindende formsteife Längsleisten (60) aus Metall oder Kunststoff befestigt sind.

15. Fahrzeug nach den Ansprüchen 12 und/oder 13, dadurch gekennzeichnet, daß die Abdeckplane (7) jeweils an ihren vertikalen Endkanten mit einem nach der Innenseite hin verdickten Keder (17) versehen ist, der in eine vertikal laufende Nutvertiefung (24) der ebenen Außenfläche (12) der Spriegelgestelle (8, 9) paßt.

16. Fahrzeug nach Anspruch 12 und/oder 15, dadurch gekennzeichnet, daß die beidendigen, von den Kedern (17) begrenzten Außenstreifen (35) der Abdeckplane (7) auf den Außenflächen (12) der Spriegelgestelle (8, 9) aufliegen und mittels unter einem Anpreßdruck stehenden Halteleisten (36) an dieser klemmend gehalten sind.

17. Fahrzeug nach Anspruch 16, dadurch gekennzeichnet, daß in beidendigen Außenstreifen (35) der Abdeckplane (7) in Abständen vorhandene, von Ösen eingefaßte Löcher (37) mit entsprechend angeordneten und dimensionierten Durchbrechungen (38) in den Außenflächen (12) der Spriegelgestelle (8, 9) übereinstimmen und von Bolzen (39) durchsetzbar sind, welche an den Innenseiten der Halteleisten (36) befestigt sind und im geschlossenen Zustand in die Hohlräume (11) der Spriegelgestelle (8, 9) hineinragen.

18. Fahrzeug nach den Ansprüchen 16 und/oder 17, dadurch gekennzeichnet, daß die Halteleisten (36) schwenkbar im Kantenbereich der Spriegelgestelle (8, 9) angelenkt sind.

19. Fahrzeug nach Anspruch 18, dadurch gekennzeichnet, daß die Halteleisten (36) mittels eines Walzen- oder scharnierartigen Gelenks (40) in einer nutartigen Ausnehmung (41) im Planspriegel (8, 9) gelagert sind.

20. Fahrzeug nach wenigstens einem der Ansprüche 15 bis 19, daduch gekennzeichnet, daß die Halteleisten (36) mittels eines gefederten Kipphebelgelenks in eine Schließ- und Öffnungsstellung bewegbar und unter Vorspannung dort gehalten sind.

21. Fahrzeug nach wenigstens einem der Ansprüche 16 bis 20, dadurch gekennzeichnet, daß die Außenflächen (12) der Spriegelgestelle (8, 9) im Bereich unterhalb der Unterkanten (10) der Abdeckplane (7) mit entsprechende Öffnungen der Halteleisten (36) in deren Schließstellung durchsetzenden Nocken/Ösen-Garnituren zur Zollverplombung versehen sind.

22. Fahrzeug nach wenigstens einem der Ansprüche 15 bis 21, dadurch gekennzeichnet, daß an der Innenseite der Halteleisten (36) im Bereich oberhalb der Führungsnasen (14) in der Geschlossenstellung der Abdeckplane (7) nach innen gerichtete, die Führungsnasen (14) der Unterkanten-Profilleisten (13) in Schließstellung der Halteleisten (36) übergreifende und diese verriegelnde Sperrnocken (50) angebracht sind.

23. Fahrzeug nach Anspruch 22, dadurch gekennzeichnet, daß die Unterkanten der Sperrnocken (50) mit einer geringen Steigung keilförmig geformt sind.

24. Fahrzeug nach wenigstens einem der Ansprüche 16 bis 21, dadurch gekennzeichnet, daß die Halteleisten (36) in der Schließstellung verriegelbar sind.

25. Fahrzeug nach Anspruch 24, dadurch gekennzeichnet, daß die Verriegelungen mit Vorrichtungen zur Sicherung gegen unbefugtes Öffnen versehen sind.

26. Fahrzeug nach Anspruch 25, dadurch gekennzeichnet, daß die Sicherung aus Überfallbügeln mit Vorhängeschlössern besteht.

27. Fahrzeug nach Anspruch 25, dadurch gekennzeichnet, daß die Sicherung aus in die Sperrnocken (50) eingebauten Sicherheits-Zylinderschlössern besteht, deren Riegel sich ein- oder beidseitig hinter die Innerwandungsfläche der Hohlräume der Spriegelgestelle (8, 9) setzen.

28. Fahrzeug nach einem oder mehreren der vorstehenden Ansprüche, dadurch gekennzeichnet, daß die Unterkanten-Profilleisten (13) an einer oder mehreren längsverteilten Stellen mit Verriegelungsvorrichtungen (51) versehen sind, deren Riegelkrallen in die Profilleiste zurückziehbar sind und mit örtlich passend angeordneten Öffnungen, Schlitzen oder dgl. im Schließzustand in Eingriff stehen.

29. Fahrzeug nach wenigstens einem der vorhergehenden Ansprüche, dadurch gekennzeichnet, daß am oberen Ende jedes Spriegelgestells (8, 9) ein Eckverbindungsstück einsteckbar ist, welches einen in Fahrzeuglängsrichtung weisenden Steckansatz zum Einstecken der Spriegel-Längsleisten (30) und einen weiteren in Fahrzeugrichtung weisenden Steckansatz zum Einstecken von Spriegel-Dachleisten und Mittel zum Fixieren der Einsteckteile sowie Lagerstellen für die Umlenkmittel (18, 25, 26) aufweist.

30. Fahrzeug nach Anspruch 29, dadurch gekennzeichnet, daß der Einsteckansatz für die Spriegel-Dachleisten um eine horizontale Achse schwenkbar ist.

31. Fahrzeug nach den Ansprüchen 29 und/oder 30, dadurch gekennzeichnet, daß die gelenkige Verbindung zwei Steckansätze zum Einstecken in die beiden Spriegel-Dachleistenteile aufweist.

## Claims

1. Vehicle with a tarpaulin mounted on hoops, one or both longitudinal sides of the tarpaulin (7) being liftable, forming longitudinal folds and folding up like an accordion, on which, on each side of the vehicle, at least two upward-leading traction means (20, 21) have been fitted to the lower edge (10) of the tarpaulin (7), these traction means being operable by a powered traction device,
characterized in
that the traction means (20, 21), arranged at both sides and fitted to the ends of the tarpaulin (7), are guided via deviating means (18) and have been linked together, on each side of the vehicle, in order to form a common traction means (21) and that they are guided within hollows (11) of the vertical part of the hoop frames (8, 9), arranged at both sides and at both ends of the tarpaulin construction, at first upwards and then within hollows (31) of longitudinal hoop strips (30) connecting two hoop frames (8, 9) each in longitudinal direction at both sides.

2. Vehicle according to claim 1, characterized in that the traction means (20), on both sides of the rear of the vehicle, guided upwards within the hoop frames (8) from the lower edges (10) of the tarpaulin (7), via deviating means (25) have been advanced into the hollows (31) of the longitudinal hoop strips (30) and there, reversed by 180° via a reversing means (26), guided again to the rear and locked together with the front traction means (21) that have been moved upwards within the front tarpaulin hoop (9) and deviated into the longitudinal hoop strips (30), coming from the lower edges (10) of the tarpaulin (7), in order to form one traction means (22) each.

3. Vehicle according to claim 1, characterized in that the deviating means (18) have been arranged in the hollows of corner connectors between the vertical tarpaulin hoops (8, 9) and the longitudinal hoop strips (30) joining the latter.

4. Vehicle according to one or several of the claims 1 to 3, characterized in that ropes of steel or synthetic material or roller chains will serve as traction means (20, 21).

5. Vehicle according to one or several of the claims 1 to 3, characterized in that deflection pulleys, sprocket wheels or deviating runners (49), made of a sliding material, will be used as deviating means (18).

6. Vehicle according to claim 1, characterized in that both traction means (20, 21), arranged on each side of the vehicle, have been locked together by rope sockets or chain joints (19) and coupled to one each of the following traction means (22).

7. Vehicle according to claims 1, 2 and 6, characterized in that the ends (23) of the following traction means (22) are guided outside from openings in the hollows (31) of the longitudinal hoop strips (30) or from those of the rear hoop frames (8) and that they can be hung up on hooks, eyes or similar means, thus being ready for use.

8. Vehicle according to claims 1, 2 and 5, characterized in that the ends (23) of the following traction means (22) have been fixed, on both sides, to hand-driven or powered winches allowing a separate or coupled operation.

9. Vehicle according to claims 1, 2 and 5, characterized in that the ends (23) of the following traction means (22) can be fixed, on one or both sides, to a loading board (5) leaving a certain distance from its swivelling axis (6).

10. Vehicle according to claim 1 and at least one of the following claims, characterized in that the vertical part of the hoop frames (8, 9) and the longitudinal hoop strips (30), connected to the latter, as well as the corner connectors (32) joining these parts, have been designed as hollow profiles (33) to receive the traction means (20, 21, 22) and provided with at least one even surface (12) pointing outside.

11. Vehicle according to claim 10, characterized in that the hollows (33) have been designed as rectangular profiles and fitted with guiding strips (28) for the traction means (20, 21).

12. Vehicle according to claim 1, characterized in that the lower edges (10) of the tarpaulin (7), available on either side, have been provided with a metal profile strip (13) and that the latter has, at both ends, been fitted with guiding noses (14) which slide in the guiding grooves (15) of the hollow profile (33) of the vertical part of the hoop frames (8, 9) and which have been linked to the traction means (20, 21) arranged in their hollows.

13. Vehicle according to claim 12, characterized in that on both inner sidesof the tarpaulin (7), between the profile strips (13) for the lower edges and the upper longitudinal hoop strips (30), rubber belts or similar flexible elements, which exercise a restoring force, have been fixed under pretension at two or more places.

14. Vehicle according to claim 13, characterized in that inherently stable longitudinal strips (60) of metal or synthetic material have been fixed to the rubber belts in order to connect the latter.

15. Vehicle according to claims 12 and/or 13, characterized in that each vertical end edge of the tarpaulin (7) has been provided with a weatherstrip (17) thickening towards the inside and fitting a vertical groove (24) of the even outer surface (12) of the hoop frames (8, 9).

16. Vehicle according to claims 12 and/or 15, characterized in that the external sections (35) of the tarpaulin (7), at either end and limited by the weatherstrips (17), lie on the outer surfaces (12) of the hoop frames (8, 9) and are held by retaining strips (36) being under pressure and clamping these sections against the outer surfaces.

17. Vehicle according to claim 16, characterized in that in the external sections (35) of the tarpaulin (7), there are, at both ends, some spaced holes (37) that have been rimmed with eyes and which coincide with correspondingly arranged and dimensioned openings (38) in the outer surfaces (12) of the hoop frames (8, 9) and which, moreover, can be passed by bolts (39), the latter being fixed to the inner sides of the retaining strips (36) and, in closed condition, projecting into the hollows (11) of the hoop frames (8, 9).

18. Vehicle according to claims 16 and/or 17, characterized in that the retaining strips (36) have slewably been linked in the edge area of the hoop frames (8, 9).

19. Vehicle according to claim 18, characterized in that the retaining strips (36) have been lodged in a groove-like recess (41) of the tarpaulin hoop (8, 9) using a roller-type or hinged link (40).

20. Vehicle according to at least one of the claims 15 to 19, characterized in that by means of a spring-loaded rocker link the retaining strips (36) can be moved into a 'closed' or 'open' position and held there under pretension.

21. Vehicle according to at least one of the claims 16 to 20, characterized in that the outer surfaces (12) of the hoop frames (8, 9), viz. in the area below the lower edges (10) of the tarpaulin (7), have been provided with pin/eye sets passing through corresponding apertures of the retaining strips (36) when the latter are in 'closed' position, thus allowing a customs plumbing.

22. Vehicle according to at least one of the claims 15 to 21, characterized in that on the inner side of the retaining strips (36), in the area above the guiding noses (14) and in the 'closed' position of the tarpaulin (7), some catches (50) have been fitted which point towards the inside, reach, in the closing position of the retaining strips (36), over the guding noses (14) of the profile strips (13) for the lower edges and lock said noses.

23. Vehicle according to claim 22, characterized in that the lower edges of the catches (50) have been designed with a slight inclination thus appearing like a wedge.

24. Vehicle according to at least one of the claims 16 to 21, characterized in that the retaining strips (36) can be locked in the closing position.

25. Vehicle according to claim 24, characterized in that the locking systems have been provided with devices for protection against unauthorized opening.

26. Vehicle according to claim 25, characterized in that this protection will be ensured by closing hasps with padlocks.

27. Vehicle according to claim 25, characterized in that the protection will be ensured by safety cylinder locks, built into the catches (50), of which the bolts will move, on one or both sides, behind the surface of the inner wall of the hollows in the hoop frames (8, 9).

28. Vehicle according to one or more of the preceding claims, characterized in that the profile strips (13) for the lower edges have, at a single or several longitudinally spread points, been provided with locking devices (51) of which the interlock claws can be withdrawn into the profile strip and, in closing condition, they will contact some correspondingly arranged apertures, slots, etc.

29. Vehicle according to at least one of the foregoing claims, characterized in that at the upper end of each hoop frame (8, 9), a corner link can be plugged in which comprises a plugging socket for the insertion of the longitudinal hoop strips (30), oriented towards the longitudinal direction of the vehicle, and a further socket pointing to the same direction for the insertion of the roof strips and means for fixing the plug-in components as well as bearings for the deviating means (18, 25, 26).

30. Vehicle according to claim 29, characterized in that the plug-in socket for the roof strips can be swivelled around an horizontal axis.

31. Vehicle according to claims 29 and/or 30, characterized in that the hinge- or knuckle joint comprises two plug-in sockets for insertion into both roof strip components.

## Revendications

1. Véhicule avec une bâche montée sur cerceaux, avec lequel l'un ou les deux côtés longitudinaux de la bâche (7) sont relevables formant des plis longitudinaux, de sorte qu'elle sera repliable en accordéon, et avec lequel, de chaque côté du véhicule, au moins deux moyens de traction (20, 21) ont été fixés aux bords inférieurs (10) de la bâche (7), moyens orientés en haut et commandables grâce à un dispositif de traction à moteur,
caractérisé par ce
que les moyens de traction (20, 21) se trouvant des deux côtés et fixés aux bouts de la bâche (7), se guident par des moyens de renvoi (18), s'unissent de chaque côté de véhicule pour former un moyen de traction commun (21) et, à cette occasion, se guident en dedans des creux (11) de la partie verticale des supports de cerceaux (8, 9) disposés des deux côtés et aux deux bouts de l'ensemble de bâche, tout d'abord en haut et en dedans des creux (31) en les barres longitudinales de cerceaux (30) reliant, des deux côtés, chaque fois deux supports de cerceaux (8, 9) en direction longitudinale.

2. Véhicule selon revendication 1, caractérisé par ce que les moyens de traction (20), guidés en haut des deux côtés à l'arrière du véhicule, à partir des bords inférieurs (10) de la bâche (7), en dedans des supports de cerceaux (8), s'avancent par des moyens de renvoi (25) dans les creux (31) des barres longitudinales de cerceaux (30) et là, ces moyens de traction se reversent par 180° grâce à d'autres moyens de renvoi (26), se guident à nouveau vers l'arrière et s'unissent avec les moyens de traction avant (21) venant des bords inférieurs (10) de la bâche (7), guidés en haut dans les cerceaux de bâche avants (9) et renversés dans les barres longitudinales de cerceaux (30), pour former chaque fois un moyen de traction (22).

3. Véhicule selon revendication 1, caractérisé par ce que les moyens de renvoi (18) ont été disposés dans les creux des coudes entre les cerceaux de bâche verticaux (8, 9) et les barres longitudinales (30) reliant ces cerceaux.

4. Véhicule selon un seul ou plusieurs des revendications 1 à 3, caractérisé par ce que des câbles en acier, des cordes en matière synthétique ou des chaînes à rouleaux servent de moyens de traction (20, 21).

5. Véhicule selon un seul ou plusieurs des revendications 1 à 3, caractérisé par ce que des poulies de renvoi, des roues à chaîne ou des patins de renversement (49) en matière glissante servent de moyens de renvoi (18).

6. Véhicule selon revendication 1, caractérisé par ce que les deux moyens de traction (20, 21) qui se trouvent des deux côtés de véhicule, ont été unis à l'aide des attaches de câbles ou des joints de chaîne (19) et couplés à chaque fois un moyen de traction (22) qui suit.

7. Véhicule selon revendications 1, 2 et 6, caractérisé par ce que les bouts (23) des moyens de traction suivants (22) sortent des ouvertures dans les creux (31) des barres longitudinales de cerceau (30) ou des supports de cerceaux arrières (8), bouts qu'on pourra suspendre, sous petite prétension, à des crochets, des yeux (29) et à d'autres éléments semblables afin qu'ils soient toujours à portée de la main.

8. Véhicule selon revendications 1, 2 et 5, caractérisé par ce que les bouts (23) des moyens de traction suivants (22) ont été fixés, des deux côtés, à des treuils (27) manuels ou motorisés avec possibilité d'un entraînement individuel ou accouplé.

9. Véhicule selon revendications 1, 2 et 5, caractérisé par ce que les bouts (23) des moyens de traction suivants (22) pourront être fixés, d'un seul ou des deux côtés, à une paroi de chargement (5), soit à une certaine distance de son axe de pivotement (6).

10. Véhicule selon revendication 1 et au moins l'une des revendications suivantes, caractérisé par ce que la partie verticale des supports de cerceaux (8, 9), les barres longitudinales (30) reliées à ces cerceaux, et les coudes (32) unissant ces éléments ont été conçus en tant que profilés creux (33) pour recevoir les moyens de traction (20, 21, 22), profilés ayant au moins une surface plane (12) orientée en dehors.

11. Véhicule selon revendication 10, caractérisé par ce que les profilés creux (33) ont été conçus comme profilés rectangulaires et dotés des barres de guidage (28) pour les moyens de traction (20, 21).

12. Véhicule selon revendication 1, caractérisé par ce que les bords inférieurs (10) de la bâche (7), lesquelles se trouvent des deux côtés, ont été reliés, chacun, à une barre profilée métallique (13) et ces barres ont été dotées, aux deux bouts, des nez de guidage (14) qui glissent dans des rainures guide (15) du profilé creux (33) appartenant à la partie verticale des supports de cerceaux (8, 9), nez attachés aux moyens de traction (20, 21) disposés dans leurs creux.

13. Véhicule selon revendication 12, caractérisé par ce qu'à deux ou plusieurs endroits des deux côtés intérieurs de la bâche (7), entre les barres profilées (13) pour les bords inférieurs et les barres de cerceaux longitudinales (30) supérieures, des cordons en caoutchouc ou d'autres éléments élastiques semblables avec force de rappel, ont été fixés sous prétension.

14. Véhicule selon revendication 13, caractérisé par ce que des barres longitudinales indéformables en métal ou matière synthétique ont été fixées aux cordons en caoutchouc pour les relier.

15. Véhicule selon revendications 12 et/ou 13, caractérisé par ce que chaque bout vertical de la bâche (7) a été doté d'un bourrelet (17) s'épaissant vers le côté intérieur,
bourrelet adapté à un creux de rainure (24) verticalement disposé de la surface extérieure plane (12) des supports de cerceaux (8, 9).

16. Véhicule selon revendications 12 et/ou 15, caractérisé par ce que les bandes extérieures (35) de la bâche (7), aux deux bouts et limitées par les bourrelets (17), reposent sur les surfaces extérieures (12) des supports de cerceaux (8, 9) où elles sont retenues par des barres de support (36) exerçant une pression de serrage, qui les calent contre ces surfaces.

17. Véhicule selon revendication 16, caractérisé par ce qu'en les bandes extérieures (35) de la bâche (7), se trouvant aux deux bouts, des trous (37) espacés et cerclés d'oeillets coincident avec des ouvertures (38) correspondamment disposées et dimensionnées dans les surfaces extérieures (12) des supports de cerceaux (8, 9) permettant le passage des chevilles (39) fixées aux côtés intérieurs des barres de support (36) et saillant, en état fermé, dans les creux (11) des supports de cerceaux (8, 9).

18. Véhicule selon revendications 16 et/ou 17, caractérisé par ce que les barres de support (36) ont été articulées dans la zone de bords des supports de cerceaux (8, 9) pour qu'elles soient orientables.

19. Véhicule selon revendication 18, caractérisé par ce que les barres de support (36) ont été logées au moyen d'un joint à rouleau ou d'une articulation à charnière (40) dans un creux (41) ressemblant à une rainure, qui se trouve en le cerceau de bâche (8, 9).

20. Véhicule selon au moins un seul des revendications 15 à 19, caractérisé par ce que grâce à un joint de levier oscillant à ressort, les barres de support (36) pourront se déplacer dans une position de fermeture ou d'ouverture et se retiennent là sous prétension.

21. Véhicule selon au moins un seul des revendications 16 à 20, caractérisé par ce que les surfaces extérieures (12) des supports de cerceaux (8, 9), dans la zone au-dessous des bords inférieurs (10) de la bâche (7), ont été équipées des jeux d'ergots/oeillets pour le plombage de douane, jeux passant par des ouvertures correspondantes dans les barres de support (36) si ces dernières se trouvent en position de fermeture.

22. Véhicule selon au moins un seul des revendications 15 à 21, caractérisé par ce qu'au côté intérieur des barres de support (36), dans la zone au-dessus des nez de guidage (14), des ergots d'arrêt (50), dirigés vers l'intérieur, ont été installés qui dépassent, en position 'fermé' de la bâche (7) et en position de fermeture des barres de support (36), les nez de guidage (14) des barres profilées (13) pour les bords inférieurs, ergots verrouillant ces nez ensuite.

23. Véhicule selon revendication 22, caractérisé par ce que les bords inférieurs des ergots d'arrêt (50) accusent une pente négligeable de sorte qu'ils ont une forme de coin.

24. Véhicule selon au moins un seul des revendications 16 à 21, caractérisé par ce que les barres de support (36) pourront se verrouiller en position de fermeture.

25. Véhicule selon revendication 24, caractérisé par ce que les ensembles de verrouillage ont été dotés des dispositifs pour la protection contre des ouvertures non-autorisées.

26. Véhicule selon revendication 25, caractérisé par ce que la protection est assurée par des moraillons avec des cadenas.

27. Véhicule selon revendication 25, caractérisé par ce que la protection est assurée par des serrures cylindriques de sûreté, incorporées dans les ergots d'arrêt (50), dont les verrous se placent, d un seul ou des deux côtés, derrière la surface de la paroi intérieure des creux qui se trouvent en des supports de cerceaux (8, 9).

28. Véhicule selon un seul ou plusieurs des revendications ci-avant mentionnées, caractérisé par ce que les barres profilées (13) pour les bords inférieurs ont été dotées, à un seul ou à plusieurs endroits longitudinalement distribués, des dispositifs de verrouillage (51) dont les griffes-verrous sont retractibles dans la barre profilée et, en état de fermeture, elles se mettent en prise avec des trous, des fentes ou d'autres ouvertures semblables qui ont été bien adaptés.

29. Véhicule selon au moins un seul des revendications précédents, caractérisé par ce qu'au bout supérieur de chaque support de cerceaux (8, 9), on pourra ficher un coude de raccordement comportant un rallonge embrochable orienté en direction longitudinale du véhicule pour ficher les barres de cerceaux longitudinales (30), un autre rallonge en même direction pour recevoir des barres de toit à cerceaux, des moyens pour fixer les éléments embrochables et des points d'appui pour les moyens de renvoi (18, 25, 26).

30. Véhicule selon revendication 29, caractérisé par ce que le rallonge embrochable pour les barres de toit à cerceaux est pivotable autour d'un axe horizontal.

31. Véhicule selon revendications 29 et/ou 30, caractérisé par ce que le joint articulé respectivement à rotule comporte deux rallonges embrochables pour les lntroduire dans les deux éléments de barre de toit à cerceaux.
